# EUROPEAN PATENT APPLICATION

(11) **EP 4 177 915 A1**
(43) Date of publication of application: **10.05.2023**
(21) Application number: 21834592.4
(22) Date of filing: 01.07.2021
(51) Int. Cl.: H01G 9/02

(54) **SEPARATOR FOR ALUMINUM ELECTROLYTIC CAPACITORS, AND ALUMINUM ELECTROLYTIC CAPACITOR**

(30) Priority: 01.07.2020 JP 2020114400
(71) Applicant: Nippon Kodoshi Corporation, Kochi-shi, Kochi 781-0395 (JP)
(72) Inventor: TANAKA, Kosuke, Kochi-shi, Kochi 781-0395 (JP); FUJIMOTO, Naoki, Kochi-shi, Kochi 781-0395 (JP); IGAWA, Atsushi, Kochi-shi, Kochi 781-0395 (JP)
(74) Representative: Betten & Resch
(86) International application number: PCT/JP2021/024993
(87) International publication number: WO 2022/004851

(57) **Abstract**

The present invention provides a separator for aluminum electrolytic capacitors, said separator being formed of natural cellulose fibers and beaten regenerated cellulose fibers, and having excellent tear strength, short-circuit resistance and impedance characteristics. This separator for aluminum electrolytic capacitors is interposed between a positive electrode and a negative electrode of an aluminum electrolytic capacitor, and is formed of from 50% by mass to 90% by mass of natural cellulose fibers and from 50% by mass to 10% by mass of beaten regenerated cellulose fibers. This separator for aluminum electrolytic capacitors is configured to have a specific tear strength of from 20 to 100 mN·m²/g and a short-circuit rate of 10% or less during application of 500 V in separator dielectric breakdown testing.

## Description

### Technical Field

The present invention relates to a separator for aluminum electrolytic capacitors suitable for use in aluminum electrolytic capacitors, and an aluminum electrolytic capacitor using the separator for aluminum electrolytic capacitors.

### Background Art

In general, an aluminum electrolytic capacitor is manufactured by interposing an electrolytic paper as a separator between a positive electrode aluminum foil and a negative electrode aluminum foil to make a capacitor element, impregnating the capacitor element with an electrolytic solution and inserting it into a case, and then sealing the case.

The main roles of the separator for aluminum electrolytic capacitors are to isolate both electrodes from each other and to hold the electrolytic solution. To isolate both electrodes from each other, the separator is required to have high shielding properties while having low resistance. Further, a material of the separator is required to have electrical insulation and is also required to have hydrophilicity and lipophilicity to hold various kinds of electrolytic solutions. Therefore, a separator made of cellulose is used because the material has these characteristics above.

Various configurations of a separator for electrochemical elements including aluminum electrolytic capacitors have thus far been proposed (refer to, for example, Patent Literatures 1 to 6.).

### Citation List

### Patent Literature

Patent Literature 1: JP S53-142652 A
Patent Literature 2: JP H03-222315 A
Patent Literature 3: JP H05-315193 A
Patent Literature 4: JP H08-250376 A
Patent Literature 5: JP H05-267103 A
Patent Literature 6: WO 2017/047699 A

### Summary of Invention

### Technical Problem

Examples of the short circuit of the aluminum electrolytic capacitor associated with the separator include (1) compression or breakage of the separator by the tab portion, (2) penetration or breakage of the separator due to burrs at the electrode foil end, burrs at the connection between the electrode foil and the lead wire, or the like, (3) breakage of the separator due to mechanical stress such as vibration or impact, (4) electrical stress such as spark discharge, and (5) dielectric breakdown of the oxide film derived from the oxide film defect portion during aging in capacitor manufacturing. The uniformity and the strength characteristics of the separator affect resistance against these short circuit causes, and the improvement of short-circuit resistance is an endless problem for the separator.

In aluminum electrolytic capacitors, particularly in those with a low voltage range of 100 V or less, separators using the technique described in Patent Literature 1 and Patent Literature 2, that is, a cylinder multilayer separator made of Manila hemp pulp and esparto pulp, and the like are generally used. However, the Manila hemp pulp is mainly produced in the Philippines, and the esparto pulp is mainly produced in Tunisia and, due to the recent political unrest and a decrease in primary industry workers, it is difficult to obtain these pulps and their prices are continuously rising year by year. Therefore, there is an urgent need to develop alternative products using raw materials that can be stably obtained.

In the aluminum electrolytic capacitor, the separator has a great influence on the impedance characteristics, particularly, equivalent series resistance (ESR). It is known that the impedance characteristics decrease as the cross-sectional shape of the pulp used for the separator is closer to a circular shape and the diameter is smaller.

Wood-derived pulp, such as softwood pulp and hardwood pulp, is produced in large amounts and can be stably obtained. However, wood pulp has a flat cross-sectional shape and a large size, and is thus not suitable as a raw material for a low voltage separator focusing on its impedance characteristics.

Examples of non-wood pulp that is industrially mass-produced and is available at a relatively low cost include malvaceae pulp, tiliaceae pulp, and poaceae pulp.

As the separator for aluminum electrolytic capacitors using poaceae pulp other than esparto, a separator using straw fiber and Manila hemp pulp and a separator using bamboo pulp are proposed in Patent Literature 3 and Patent Literature 4, respectively.

However, both Patent Literature 3 and Patent Literature 4 aim to improve sound quality of acoustic equipment. The main required characteristics for the separator for the acoustic equipment are sound quality felt by humans, and are greatly different from the impedance characteristics required for general low voltage separators.

The malvaceae pulp, tiliaceae pulp, and poaceae pulp contain many plant-derived parenchyma cells, and the parenchyma cell is very wide and short compared to pulp. The presence of many parenchyma cells causes problems such as the deterioration of the impedance characteristics and the reduction of tensile strength and tear strength. In addition, as compared to softwood pulp, Manila hemp pulp, and the like, the average fiber length of the main fibers of the malvaceae pulp, tiliaceae pulp, and poaceae pulp is short, and the strength characteristics such as tensile strength and tear strength are inferior. For this reason, it has been difficult to realize the short-circuit resistance and impedance performance required for the general low pressure separators using a separator mainly composed of the malvaceae pulp, tiliaceae pulp, and poaceae pulp.

It is known that beatable regenerated cellulose fibers are characterized in that fibrils having high rigidity and a small fiber diameter are generated when the fibers are highly beaten, and that a separator excellent in short-circuit resistance and impedance characteristics can be made of such fibers. Due to this, many separators using beatable regenerated cellulose fibers have been proposed in recent years. The beatable regenerated cellulose fibers are an industrial product and thus can be stably obtained.

Patent Literature 5 proposes a method using the beatable regenerated cellulose fibers to improve the denseness of the separator and improve the impedance characteristics. A separator using the beaten regenerated cellulose fibers has microporous paper quality with high denseness, and an aluminum electrolytic capacitor manufactured using such a separator has a reduced short circuit failure ratio and improved impedance characteristics.

However, when a separator containing 100% by mass of beaten regenerated cellulose fibers is used as in Patent Literature 5, the separator has low tensile strength and tear strength, which may result in breakage in the manufacturing process of the aluminum electrolytic capacitor. In addition, since it has low strength, the separator has low resistance to areas under stress such as a tab portion or a foil burr of the aluminum electrolytic capacitor, which may cause breakage of the separator and a short circuit.

Patent Literature 5 also proposes blending Manila hemp pulp, sisal hemp pulp, and the like with beatable regenerated cellulose fibers. Although the tensile strength and tear strength are improved when the Manila hemp pulp and sisal hemp pulp is blended with the beatable regenerated cellulose fibers, there has been a problem that the formation of the separator deteriorates because the Manila hemp pulp or sisal hemp pulp, which is hardly beaten and has a high CSF value, has a long fiber length. As the fiber length is longer, it becomes more difficult to uniformly disperse the fibers in water, and to form a uniform paper layer during papermaking. To improve the formation, it is necessary to shorten the fiber length of the Manila hemp pulp or sisal hemp pulp by promoting beating on them. However, since beating the Manila hemp pulp or sisal hemp pulp greatly deteriorates the impedance characteristics, beating has been hardly performed.

Patent Literature 6 proposes a separator made of natural cellulose fibers A, natural cellulose fibers B, and beaten regenerated cellulose fibers, in which the tensile strength and the short-circuit resistance are improved while maintaining denseness and impedance characteristics similar to those of a separator made of highly beaten regenerated cellulose. In the separator of Patent Literature 6, to make a separator having a good formation with a Fourdrinier paper machine, beating on the regenerated cellulose fibers is highly promoted and natural cellulose fibers having a short average fiber length are used. For this reason, the separator of Patent Literature 6 has a relatively short average fiber length, and cannot improve the tear strength as compared to a separator containing 100% by mass of beatable regenerated cellulose fibers. When tension is applied to the separator in the manufacturing process of the aluminum electrolytic capacitor, the separator having low tear strength may be broken if the separator has a twist or the like.

An object of the present invention is to provide a separator for aluminum electrolytic capacitors, said separator being formed of natural cellulose fibers and beaten regenerated cellulose fibers, and having excellent tear strength, short-circuit resistance and impedance characteristics.

Another object of the present invention is to provide an aluminum electrolytic capacitor that includes such a separator for aluminum electrolytic capacitors and is excellent in short-circuit resistance and impedance characteristics.

### Solution to Problem

A separator for aluminum electrolytic capacitors of the present invention is a separator for aluminum electrolytic capacitors interposed between a positive electrode and a negative electrode of an aluminum electrolytic capacitor, formed of natural cellulose fibers and beaten regenerated cellulose fibers, and having a short-circuit rate of 10% or less during application of 500 V in separator dielectric breakdown testing.

The aluminum electrolytic capacitor of the present invention includes a positive electrode, a negative electrode, and a separator interposed between the positive electrode and the negative electrode, and uses as a separator the above-described separator for aluminum electrolytic capacitors of the present invention.

### Advantageous Effects of Invention

According to the present invention described above, it is possible to provide a separator for aluminum electrolytic capacitors excellent in tear strength, short-circuit resistance, and impedance characteristics, and an aluminum electrolytic capacitor using such a separator.

In addition, according to the present invention, it is possible to form the separator using inexpensive fibers such as malvaceae pulp, tiliaceae pulp, and poaceae pulp since the short-circuit rate during application of 500 V in the separator dielectric breakdown testing is 10% or less.

### Description of Embodiments

Hereinafter, an embodiment of the present invention will be described in detail.

A separator for aluminum electrolytic capacitors of the present invention is a separator for aluminum electrolytic capacitors interposed between a positive electrode and a negative electrode of an aluminum electrolytic capacitor, and configured to have a short-circuit rate of 10% or less during application of 500 V in the separator dielectric breakdown testing.

The aluminum electrolytic capacitor of the present invention includes a positive electrode, a negative electrode, and a separator interposed between the positive electrode and the negative electrode, and uses as a separator the separator for aluminum electrolytic capacitors according to the present invention.

In the separator for aluminum electrolytic capacitors of the present invention, preferably, the separator is composed of from 50% by mass to 90% by mass of one or more kinds of natural cellulose fibers selected from the group consisting of malvaceae pulp, tiliaceae pulp, and poaceae pulp, and from 50% by mass to 10% by mass of beaten regenerated cellulose fibers. Thus, the separator can be configured using raw materials that can be stably obtained.

The beaten regenerated cellulose fibers are excellent in short-circuit resistance and impedance characteristics compared to one or more kinds of natural cellulose fibers selected from the group consisting of malvaceae pulp, tiliaceae pulp, and poaceae pulp. In addition, by controlling the beating degree and the average fiber length, the tensile strength and the tear strength can be improved as compared to a separator made of only one or more kinds of natural cellulose fibers selected from the group consisting of malvaceae pulp, tiliaceae pulp, and poaceae pulp. Therefore, particularly when a low-density separator of 0.45 g/cm³ or less is manufactured, it is possible to reduce the degree of beating of the natural cellulose fibers performed to improve the tensile strength, and furthermore, improve the impedance characteristics of the separator. When the ratio of the beaten regenerated cellulose fibers is less than 10% by mass, it is difficult to obtain the effect of improving short-circuit resistance and strength characteristics and the effect of reducing impedance.

It is preferable to use a cylinder multilayer paper machine to make the paper of the separator of the present invention. The cylinder paper machine is a paper machine using a method in which a netted cylinder (hereinafter abbreviated as "cylinder") is rotated in a tank containing a pulp suspension to form a paper layer on the net while water flows into the cylinder through the net due to a water level difference. When the paper layer is formed, pulp is deposited on the net in the initial stage, but as the net is gradually clogged in the subsequent stage, fine pulp and parenchymal cells that flow through together with water in the initial stage are also included in the paper layer in the intermediate and subsequent stages. This causes the paper made by the cylinder paper machine to generally have different ratios of the number of parenchymal cells present on the surfaces between the front and back.

Malvaceae pulp, tiliaceae pulp, and poaceae pulp contain many parenchyma cells. The material constituting the separator can be classified by shape into fibrous pulp and parenchymal cells. Since parenchymal cells are very wide and short compared to pulp, they adversely affect the impedance characteristics and the tensile strength of the separator. Malvaceae pulp, tiliaceae pulp, and poaceae pulp have a shorter average fiber length than that of Manila hemp pulp, and thus are characterized in that it is easy to make the formation of the paper uniform and to manufacture a separator excellent in denseness. However, since the average fiber length is short, strength characteristics such as tensile strength and tear strength tend to be inferior. By reducing the number of parenchymal cells in the separator, the average fiber length can be increased, thus improving the strength characteristics.

In the present invention, it is preferable to use a plurality of cylinders to reduce the number of parenchymal cells remaining in the separator. That is, the number of parenchymal cells in the separator can be greatly reduced when one separator is formed by superimposing a plurality of paper layers composed of the material only from the initial stage of paper layer formation, that is, paper layers having a low parenchymal cell content. By controlling the number of parenchymal cells in the separator, even a separator containing a large amount of malvaceae pulp, tiliaceae pulp, and poaceae pulp can realize the short-circuit resistance and the impedance characteristics that can be used as the separator for aluminum electrolytic capacitors.

Beaten regenerated cellulose fibers have fibrils of small fiber diameter, thus forming a dense paper layer. However, since the yield of parenchymal cells of natural fibers is improved when the ratio of the beaten regenerated cellulose fibers increases in the separator of the present invention, the impedance characteristics are hardly reduced even when the blending ratio is increased. Therefore, the ratio of the beaten regenerated cellulose fibers needs to be 50% by mass or less in the separator of the present invention.

When the same raw material is used for papermaking, the cylinder paper machine can control the weight per unit area of paper (hereinafter abbreviated as "basis weight") by changing the pulp suspension concentration and the cylinder rotation speed. Thus, when paper of the same basis weight is produced at the same speed, the pulp suspension concentration can be reduced to about half, for example, by changing the number of cylinders from one to two. As the concentration of the pulp suspension is lower, more parenchymal cells in the separator can be reduced. The concentration of the pulp suspension is preferably 0.3% or less.

In the present invention, the size of the opening of the net is also important. Since a general size of a parenchymal cell is about (20 to several tens of um) × (20 to 150 um), the opening of the net is preferably 0.1 mm or more × 0.1 mm or more to promote the outflow of parenchymal cells.

The impedance characteristics of the separator are improved by greatly reducing the number of parenchymal cells in the separator, and the impedance characteristics at the same level as those of the cylinder multilayer separator made of Manila hemp pulp, esparto pulp, and the like can be realized even when malvaceae pulp, tiliaceae pulp, or poaceae pulp is used.

As an index of the number of parenchymal cells contained in a separator, it is preferable to set a front-to-back ratio (anti-cylinder contact surface/cylinder contact surface) to 5 or less. Note that the number of parenchymal cells is small on the surface in contact with the cylinder and is large on the surface not in contact with the cylinder, and thus, it is difficult to set the front-to-back ratio to less than 1. On the other hand, if the front-to-back ratio is more than 5, the outflow of parenchymal cells becomes insufficient, and the impedance characteristics and the tensile strength of the separator are likely to deteriorate. In addition, when a separator having a front-to-back ratio of more than 5 is used in the aluminum electrolytic capacitor, the short-circuit rate is likely to deteriorate along with a decrease in tensile strength or the like.

Note that a ratio of a surface with a large number of parenchymal cells/a surface with a small number of parenchymal cells may be set to 5 or less when it is difficult to distinguish between the cylinder contact surface and the anti-cylinder contact surface.

A fiber used in the present invention is not particularly limited to Malvaceae pulp, tiliaceae pulp, and poaceae pulp, and any fiber can be used. For example, kenaf pulp, jute pulp, rice straw pulp, straw pulp, bamboo pulp, bagasse pulp, reed pulp, sabai grass pulp, dragon grass pulp, lalang grass pulp and the like are suitably used. One kind of the materials may be used or two or more kinds may be blended. In addition, these pulps may be subjected to a bleaching treatment, or may be purified like a dissolved pulp or be a mercerized pulp.

Malvaceae pulp, tiliaceae pulp, and poaceae pulp used in the present invention are preferably subjected to a beating treatment. However, the beating treatment is not required depending on the density of the separator to be manufactured.

Examples of the regenerated cellulose fiber used in the present invention include solvent-spun rayon typified by lyocell and polynosic rayon. However, the fiber used in the present invention is not limited to these examples, and any beatable regenerated cellulose fiber can be used.

Any fiber diameter of the regenerated cellulose fibers before beating can be used, but if the fiber diameter before beating is too large, fluidity during beating is poor and thus defects such as clogging are likely to occur. If the fiber diameter before beating is too small, the amount of fibrils generated by beating is reduced, which makes it difficult to ensure denseness. Therefore, the fiber diameter before beating is preferably 3 to 18 um.

The beating degree of the regenerated cellulose fibers is preferably 200 ml or less in terms of CSF value. If the CSF value is higher than 200 ml, the denseness of the separator is insufficient.

Since tear strength is weakened if the average fiber length is too short, the average fiber length of the regenerated cellulose fibers is preferably 1.0 mm or more. On the other hand, since it is difficult to uniformly disperse the fibers in water during papermaking if the average fiber length is too long, the formation of the separator deteriorates, thus worsening the short-circuit resistance. Therefore, the average fiber length of the regenerated cellulose fibers is preferably 3.5 mm or less.

For the beating treatment of natural cellulose fibers and regenerated cellulose fibers, a beating machine used for preparation of a papermaking raw material, such as a disc refiner, a conical refiner, a high-pressure homogenizer, or a beater, can be used without particular limitation. The beating treatment of the natural cellulose fibers and the regenerated cellulose fibers may be performed individually or may be performed by mixing them.

When the separator is manufactured, additives such as a dispersant, an antifoaming agent, and a paper strength enhancer may be used as necessary as long as they do not impair the function of the capacitor separator. For the paper strength enhancing treatment, a water-soluble polymer may be applied after the separator is made.

When papermaking is performed by the cylinder multilayer paper machine, the raw materials used for each layer may be the same, or the beating degree or the kind of raw materials may be changed. When the same raw material is used, the process can be simplified.

As described above, the separator of the present invention is configured to have a short-circuit rate of 10% or less during application of 500 V in the separator dielectric breakdown testing.

If the short-circuit rate during application of 500 V in the separator dielectric breakdown testing exceeds 10%, a short circuit is likely to occur in the aging test for aluminum electrolytic capacitors.

In the separator according to the present invention, the tensile strength of the separator is preferably 9.8 N/15 mm or more. If the tensile strength is less than 9.8 N/15 mm, rupture of the separator is likely to occur during the manufacturing of the element of the aluminum electrolytic capacitor and on other occasions.

The thickness of the separator is preferably 20 to 120 um.

Since the diameter of the fiber cross section of malvaceae pulp, tiliaceae pulp, and poaceae pulp is about 10 to 15 um, it is difficult for the separator having a plurality of layers formed by the cylinder paper machine to maintain the required strength if the thickness is less than 20 um.

If the thickness of the separator is more than 120 um, it is disadvantageous to downsizing of the aluminum electrolytic capacitor.

The density of the separator is preferably 0.25 to 0.70 g/cm³.

If the density is lower than 0.25 g/cm³, the strength of the separator is significantly reduced.

If the density is made higher than 0.70 g/cm³, the impedance characteristics of the capacitor significantly deteriorate.

The specific tear strength of the separator of the present invention is 20 to 100 mN·m²/g, and the basis weight of the separator is preferably 8 g/m² or more.

If the specific tear strength of the separator is less than 20 mN·m²/g, the tear strength per unit basis weight of the separator is weak, and the separator is likely to be torn in the width direction and ruptured when the separator has a twist or the like in the manufacturing process of the aluminum electrolytic capacitor.

On the other hand, if the specific tear strength of the separator exceeds 100 mN·m²/g, it means that the fiber length of the fibers constituting the separator is long. If the fiber length is long, the uniformity of the sheet is insufficient, and thus the sheet may include a portion where the denseness of the separator is locally deteriorated.

If the basis weight is less than 8 g/m², as described above, the number of fibers constituting the separator is small, and the short circuit failure of the aluminum electrolytic capacitor may increase. In addition, when the basis weight is less than 8 g/m², the tear strength is weak even if the specific tear strength is high, and thus the productivity of the aluminum electrolytic capacitor may not be significantly improved. For this reason, the basis weight of the separator is preferably 8 g/m² or more.

With the above-described configuration of the separator, it has been found that a separator for aluminum electrolytic capacitors formed of natural cellulose fibers and beaten regenerated cellulose fibers, and having excellent tear strength, short-circuit resistance and impedance characteristics can be obtained.

The aluminum electrolytic capacitor of the present invention can be manufactured using the above-described separator for aluminum electrolytic capacitors of the present invention.

For example, an aluminum electrolytic capacitor can be manufactured by interposing the separator between the positive electrode aluminum foil and the negative electrode aluminum foil and winding them to form the element, impregnating the element with the electrolytic solution and inserting it into the case, and then sealing the case.

### Examples

Hereinafter, various specific examples and comparative examples of the separator for aluminum electrolytic capacitors according to the present invention and the aluminum electrolytic capacitor including the separator for aluminum electrolytic capacitors will be described in detail.

### [Method for measuring characteristics of separator and aluminum electrolytic capacitor]

Specific measurement of each characteristic of the separator and the aluminum electrolytic capacitor of the present embodiment was performed under the following conditions and methods.

### [CSF value]

The CSF value is a value measured in accordance with JIS P 8121-2 "Pulps - Determination of drainability - Part 2: Canadian Standard" (ISO 5267-2 "Pulps-Determination of drawability-Part 2: `Canadian Standard' freeness method").

### [Thickness, basis weight, and density]

The thickness of the separator was measured using a micrometer in "5.1.1 Measuring instrument and measuring method a) When outer micrometer is used" according to the method in which 10 sheets are folded in "5.1.3 When paper is folded to measure thickness" specified in "JIS C 2300-2 `Cellulosic papers for electrical purposes-Part 2: Methods of test' 5.1 Thickness".

The basis weight of the separator was measured in a bone-dry state according to the method specified in "JIS C 2300-2 `Cellulosic papers for electrical purposes-Part 2: Methods of test' 6 Basis weight". The density of the separator was measured in a bone-dry state according to the method specified in "JIS C 2300-2 `Cellulosic papers for electrical purposes-Part 2: Methods of test' 7.0A Density B method".

### [Tensile strength]

The tensile strength was measured by measuring the maximum tensile load in the longitudinal direction (manufacturing direction) of the separator with a test width of 15 mm according to the method specified in "JIS P 8113 'Paper and board-Determination of tensile properties-Part 2: Constant rate of elongation method'" (ISO 1924-2 "Paper and board-Determination of tensile properties-Part 2: Constant rate of elongation method").

### [Average fiber length]

The average fiber length is a value of a length-weighted mean length based on a contour length (fiber length along center line) measured using Kajaani Fiberlab Ver. 4 (manufactured by Metso Automation) in accordance with JIS P 8226-2 "Pulps-Determination of fibre length by automated optical analysis-Part 2: Unpolarized light method" (ISO 16065-2 "Pulps-Determination of fibre length by automated optical analysis-Part 2: Unpolarized light method").

### [Specific tear strength]

The tear strength of the separator in the lateral direction (width direction) was measured according to the method specified in "JIS P 8116 `Paper-Determination of tearing resistance-Elmendorf tearing tester method'" (ISO 1974 "Paper-Determination of tearing resistance-Elmendorf method"). Then, the obtained tear strength value was divided by the basis weight of the separator to determine the specific tear strength of the separator.

### [Short-circuit Rate when 500 V Are Applied during Separator Dielectric Breakdown Testing]

A dielectric breakdown voltage of a separator was measured at a total of 100 points by a method specified in "JIS C 2300-2 `Cellulosic papers for electrical purposes-Part 2: Methods of test' 24 Dielectric breakdown strength 24.2.2 Case of direct current Method B 24.1.2.1 Method 2", and a ratio of short circuits at voltages of less than 500 V was calculated and defined as a short-circuit rate when 500 V are applied during separator dielectric breakdown testing (hereinafter abbreviated as "short-circuit rate during application of 500 V").

### [Front-to-Back Ratio of Number of Parenchymal Cells Present on Separator Surface]

The number of parenchymal cells present on front and back surfaces of a separator of 1000 um (vertical direction) × 5000 um (horizontal direction) was measured at a magnification of 200 times using a scanning electron microscope (hereinafter abbreviated as "SEM"). The number of parenchymal cells on the anti-cylinder side was divided by the number of parenchymal cells on the cylinder side to determine the ratio between the front and back of parenchymal cells present on the separator surface (Hereinafter, it is abbreviated as "front-to-back ratio of parenchymal cells".).

### [Manufacturing of aluminum electrolytic capacitor using separator]

The manufacturing method of the aluminum electrolytic capacitor using the separator of the present exemplary embodiment will be described below.

Using the separator having the above-described configuration, the aluminum electrolytic capacitor was fabricated by interposing the separator between the positive electrode aluminum foil and the negative electrode aluminum foil and winding them to form the element, impregnating the element with the electrolytic solution and inserting it into the case, and then sealing the case.

### [Impedance]

The impedance of the fabricated aluminum electrolytic capacitor was measured at a frequency of 100 kHz at 20 °C using an LCR meter.

### [Example 1]

A triple-layer separator having a thickness of 50 um, a basis weight of 22.5 g/m², and a density of 0.45 g/cm³ was obtained by beating a raw material obtained by mixing 60% by mass of kenaf pulp having a CSF value of 550 ml, which is malvaceae pulp, and 40% by mass of lyocell fibers having a CSF value of 30 ml and an average fiber length of 1.75 mm, which are beaten regenerated cellulose fibers, to a CSF value of 150 ml using a double disc refiner (hereinafter, abbreviated as "DDR") and then making paper using a cylinder triple-layer paper machine. The tensile strength of this separator was 24.5 N/15 mm, the specific tear strength was 47.9 mN·m²/g, the short-circuit rate during application of 500 V was 0.2%, and the front-to-back ratio of number of parenchymal cells was 2.5.

Five hundred capacitor elements were fabricated using this separator, impregnated with an EG-based electrolytic solution and inserted into a case, and then sealed to form an aluminum electrolytic capacitor having a rated voltage of 100 V, a capacity of 100 µF, a diameter of 12.5 mm, and a length of 20 mm. This aluminum electrolytic capacitor was not short-circuited in the aging test, and had an impedance of 0.18 Ω.

### [Example 2]

A triple-layer separator having a thickness of 60 um, a basis weight of 15.0 g/m², and a density of 0.25 g/cm³ was obtained by beating a raw material obtained by mixing 80% by mass of kenaf pulp having a CSF value of 700 ml, which is malvaceae pulp, and 20% by mass of lyocell fibers having a CSF value of 200 ml and an average fiber length of 3.50 mm, which are beaten regenerated cellulose fibers, to a CSF value of 400 ml using the DDR, making paper using the cylinder triple-layer paper machine, and then impregnating and coating the paper with a paper strength enhancer, which is a water-soluble polymer. The tensile strength of this separator was 16.7 N/15 mm, the specific tear strength was 98.0 mN·m²/g, the short-circuit rate during application of 500 V was 5.8%, and the front-to-back ratio of number of parenchymal cells was 1.7.

Five hundred capacitor elements were fabricated using this separator, impregnated with an EG-based electrolytic solution and inserted into a case, and then sealed to form an aluminum electrolytic capacitor having a rated voltage of 100 V, a capacity of 100 µF, a diameter of 12.5 mm, and a length of 20 mm. This aluminum electrolytic capacitor was not short-circuited in the aging test, and had an impedance of 0.15 Ω.

### [Example 3]

A double-layer separator having a thickness of 20 um, a basis weight of 9.0 g/m², and a density of 0.45 g/cm³ was obtained by beating a raw material obtained by mixing 50% by mass of kenaf pulp having a CSF value of 100 ml, which is tiliaceae pulp, and 50% by mass of lyocell fibers having a CSF value of 0 ml and an average fiber length of 1.05 mm, which are beaten regenerated cellulose fibers, to a CSF value of 20 ml using the DDR and then making paper using the cylinder double-layer paper machine. The tensile strength of this separator was 10.0 N/15 mm, the specific tear strength was 38.1 mN·m²/g, the short-circuit rate during application of 500 V was 9.6%, and the front-to-back ratio of number of parenchymal cells was 3.7.

Five hundred capacitor elements were fabricated using this separator, impregnated with an EG-based electrolytic solution and inserted into a case, and then sealed to form an aluminum electrolytic capacitor having a rated voltage of 100 V, a capacity of 100 µF, a diameter of 12.5 mm, and a length of 20 mm. This aluminum electrolytic capacitor was not short-circuited in the aging test, and had an impedance of 0.15 Ω.

### [Example 4]

A double-layer separator having a thickness of 35 um, a basis weight of 21.0 g/m², and a density of 0.60 g/cm³ was obtained by beating a raw material obtained by mixing 90% by mass of bamboo pulp having a CSF value of 300 ml, which is poaceae pulp, and 10% by mass of lyocell fibers having a CSF value of 10 ml and an average fiber length of 1.35 mm, which are beaten regenerated cellulose fibers, to a CSF value of 200 ml using the DDR and then making paper using the cylinder double-layer paper machine. The tensile strength of this separator was 32.3 N/15 mm, the specific tear strength was 35.0 mN·m²/g, the short-circuit rate during application of 500 V was 1.6%, and the front-to-back ratio of number of parenchymal cells was 2.8.

Five hundred capacitor elements were fabricated using this separator, impregnated with an EG-based electrolytic solution and inserted into a case, and then sealed to form an aluminum electrolytic capacitor having a rated voltage of 100 V, a capacity of 100 µF, a diameter of 12.5 mm, and a length of 20 mm. This aluminum electrolytic capacitor was not short-circuited in the aging test, and had an impedance of 0.18 Ω.

### [Example 5]

A double-layer separator having a thickness of 40 um, a basis weight of 20.0 g/m², and a density of 0.50 g/cm³ was obtained by beating a raw material obtained by mixing 50% by mass of straw pulp having a CSF value of 400 ml, which is poaceae pulp, and 50% by mass of lyocell fibers having a CSF value of 100 ml and an average fiber length of 2.55 mm, which are beaten regenerated cellulose fibers, to a CSF value of 160 ml using the DDR and then making paper using the cylinder double-layer paper machine. The tensile strength of this separator was 16.7 N/15 mm, the specific tear strength was 27.0 mN·m²/g, the short-circuit rate during application of 500 V was 0.8%, and the front-to-back ratio of number of parenchymal cells was 4.8.

Five hundred capacitor elements were fabricated using this separator, impregnated with an EG-based electrolytic solution and inserted into a case, and then sealed to form an aluminum electrolytic capacitor having a rated voltage of 100 V, a capacity of 100 µF, a diameter of 12.5 mm, and a length of 20 mm. This aluminum electrolytic capacitor was not short-circuited in the aging test, and had an impedance of 0.22 Ω.

### [Example 6]

A double-layer separator having a thickness of 50 um, a basis weight of 25.0 g/m², and a density of 0.50 g/cm³ was obtained by beating a raw material obtained by mixing 70% by mass of dragon grass pulp having a CSF value of 650 ml, which is poaceae pulp, and 30% by mass of polynosic rayon fibers having a CSF value of 70 ml and an average fiber length of 2.20 mm, which are beaten regenerated cellulose fibers, to a CSF value of 380 ml using the DDR and then making paper using the cylinder double-layer paper machine. The tensile strength of this separator was 29.4 N/15 mm, the specific tear strength was 37.2 mN·m²/g, the short-circuit rate during application of 500 V was 0.0%, and the front-to-back ratio of number of parenchymal cells was 4.1.

Five hundred capacitor elements were fabricated using this separator, impregnated with an EG-based electrolytic solution and inserted into a case, and then sealed to form an aluminum electrolytic capacitor having a rated voltage of 100 V, a capacity of 100 µF, a diameter of 12.5 mm, and a length of 20 mm. This aluminum electrolytic capacitor was not short-circuited in the aging test, and had an impedance of 0.20 Ω.

### [Comparative Example 1]

A triple-layer separator having a thickness of 65 um, a basis weight of 15.0 g/m², and a density of 0.23 g/cm³ was obtained by beating a raw material obtained by mixing 80% by mass of kenaf pulp having a CSF value of 700 ml, which is malvaceae pulp, and 20% by mass of lyocell fibers having a CSF value of 230 ml and an average fiber length of 3.70 mm, which are beaten regenerated cellulose fibers, to a CSF value of 460 ml using the DDR, making paper using the cylinder triple-layer paper machine, and then impregnating and coating the paper with the paper strength enhancer, which is a water-soluble polymer. The tensile strength of this separator was 10.8 N/15 mm, the specific tear strength was 104.9 mN·m²/g, the short-circuit rate during application of 500 V was 16.4%, and the front-to-back ratio of number of parenchymal cells was 1.5.

Five hundred capacitor elements were fabricated using this separator, impregnated with an EG-based electrolytic solution and inserted into a case, and then sealed to form an aluminum electrolytic capacitor having a rated voltage of 100 V, a capacity of 100 µF, a diameter of 12.5 mm, and a length of 20 mm. This aluminum electrolytic capacitor was short-circuited in the aging test, and the impedance of the capacitor that was not short-circuited was 0.16 Ω.

### [Comparative Example 2]

Using the same raw materials as in Example 3, a double-layer separator having a thickness of 18 um, a basis weight of 7.7 g/m², and a density of 0.43 g/cm³ was obtained with the cylinder double-layer paper machine. The tensile strength of this separator was 9.0 N/15 mm, the specific tear strength was 38.0 mN·m²/g, the short-circuit rate during application of 500 V was 23.0%, and the front-to-back ratio of number of parenchymal cells was 3.3.

Five hundred capacitor elements were fabricated using this separator, impregnated with an EG-based electrolytic solution and inserted into a case, and then sealed to form an aluminum electrolytic capacitor having a rated voltage of 100 V, a capacity of 100 µF, a diameter of 12.5 mm, and a length of 20 mm. Rupture of the separator occurred during the fabrication of the capacitor element under the influence of the weak tensile strength. This aluminum electrolytic capacitor was short-circuited in the aging test, and the impedance of the capacitor that was not short-circuited was 0.13 Ω.

### [Comparative Example 3]

A double-layer separator having a thickness of 35 um, a basis weight of 21.0 g/m², and a density of 0.60 g/cm³ was obtained by beating a raw material obtained by mixing 95% by mass of bamboo pulp having a CSF value of 300 ml, which is poaceae pulp, and 5% by mass of lyocell fibers having a CSF value of 10 ml and an average fiber length of 1.35 mm, which are beaten regenerated cellulose fibers, to a CSF value of 270 ml using the DDR and then making paper using the cylinder double-layer paper machine. The tensile strength of this separator was 23.5 N/15 mm, the specific tear strength was 23.3 mN·m²/g, the short-circuit rate during application of 500 V was 2.6%, and the front-to-back ratio of number of parenchymal cells was 2.5.

Five hundred capacitor elements were fabricated using this separator, impregnated with an EG-based electrolytic solution and inserted into a case, and then sealed to form an aluminum electrolytic capacitor having a rated voltage of 100 V, a capacity of 100 µF, a diameter of 12.5 mm, and a length of 20 mm. This aluminum electrolytic capacitor was not short-circuited in the aging test, and had an impedance of 0.20 Ω.

### [Comparative Example 4]

A double-layer separator having a thickness of 35 um, a basis weight of 21.0 g/m², and a density of 0.60 g/cm³ was obtained by beating bamboo pulp, which is poaceae pulp, to a CSF value of 300 ml using the DDR, and making paper using the cylinder double-layer paper machine. The tensile strength of this separator was 23.5 N/15 mm, the specific tear strength was 22.4 mN·m²/g, the short-circuit rate during application of 500 V was 2.8%, and the front-to-back ratio of number of parenchymal cells was 2.4.

Five hundred capacitor elements were fabricated using this separator, impregnated with an EG-based electrolytic solution and inserted into a case, and then sealed to form an aluminum electrolytic capacitor having a rated voltage of 100 V, a capacity of 100 µF, a diameter of 12.5 mm, and a length of 20 mm. This aluminum electrolytic capacitor was not short-circuited in the aging test, and had an impedance of 0.20 Ω.

### [Comparative Example 5]

A double-layer separator having a thickness of 40 um, a basis weight of 20.0 g/m², and a density of 0.50 g/cm³ was obtained by beating a raw material obtained by mixing 40% by mass of straw pulp having a CSF value of 400 ml, which is poaceae pulp, and 60% by mass of lyocell fibers having a CSF value of 100 ml and an average fiber length of 2.55 mm, which are beaten regenerated cellulose fibers, to a CSF value of 140 ml using the DDR and then making paper using the cylinder double-layer paper machine. The tensile strength of this separator was 18.6 N/15 mm, the specific tear strength was 28.4 mN·m²/g, the short-circuit rate during application of 500 V was 0.4%, and the front-to-back ratio of number of parenchymal cells was 5.3.

Five hundred capacitor elements were fabricated using this separator, impregnated with an EG-based electrolytic solution and inserted into a case, and then sealed to form an aluminum electrolytic capacitor having a rated voltage of 100 V, a capacity of 100 µF, a diameter of 12.5 mm, and a length of 20 mm. This aluminum electrolytic capacitor was not short-circuited in the aging test, and had an impedance of 0.27 Ω.

### [Comparative Example 6]

A triple-layer separator having a thickness of 30 um, a basis weight of 15.0 g/m², and a density of 0.50 g/cm³ was obtained by beating a raw material obtained by mixing 50% by mass of straw pulp having a CSF value of 200 ml, which is poaceae pulp, and 50% by mass of lyocell fibers having a CSF value of 0 ml and an average fiber length of 0.95 mm, which are beaten regenerated cellulose fibers, to a CSF value of 40 ml using the DDR and then making paper using the cylinder triple-layer paper machine. The tensile strength of this separator was 14.7 N/15 mm, the specific tear strength was 18.3 mN·m²/g, the short-circuit rate during application of 500 V was 0.4%, and the front-to-back ratio of number of parenchymal cells was 4.6.

Five hundred capacitor elements were fabricated using this separator, impregnated with an EG-based electrolytic solution and inserted into a case, and then sealed to form an aluminum electrolytic capacitor having a rated voltage of 100 V, a capacity of 100 µF, a diameter of 12.5 mm, and a length of 20 mm. Rupture of the separator occurred during the fabrication of the capacitor element because the tear strength and specific tear strength were weak. This aluminum electrolytic capacitor was not short-circuited in the aging test, and had an impedance of 0.21 Ω.

### [Comparative Example 7]

Using the same raw materials as in Example 6, a single-layer separator having a thickness of 50 um, a basis weight of 25.0 g/m², and a density of 0.50 g/cm³ was obtained with the cylinder single-layer paper machine. The tensile strength of this separator was 28.4 N/15 mm, the specific tear strength was 36.8 mN·m²/g, the short-circuit rate during application of 500 V was 2.4%, and the front-to-back ratio of number of parenchymal cells was 6.8.

Five hundred capacitor elements were fabricated using this separator, impregnated with an EG-based electrolytic solution and inserted into a case, and then sealed to form an aluminum electrolytic capacitor having a rated voltage of 100 V, a capacity of 100 µF, a diameter of 12.5 mm, and a length of 20 mm. This aluminum electrolytic capacitor was not short-circuited in the aging test, and had an impedance of 0.26 Ω.

### [Conventional Example 1]

A double-layer separator having a thickness of 50 um, a basis weight of 25.0 g/m², and a density of 0.50 g/cm³ was obtained by mixing 50% of Manila hemp pulp, which is musaceae pulp, and 50% of esparto pulp, which is poaceae pulp, to a CSF value of 550 ml using the DDR, and then making paper using the cylinder double-layer paper machine. The tensile strength of this separator was 29.4 N/15 mm, the specific tear strength was 32.9 mN·m²/g, the short-circuit rate during application of 500 V was 4.0%, and the front-to-back ratio of number of parenchymal cells was 1.9.

Five hundred capacitor elements were fabricated using this separator, impregnated with an EG-based electrolytic solution and inserted into a case, and then sealed to form an aluminum electrolytic capacitor having a rated voltage of 100 V, a capacity of 100 µF, a diameter of 12.5 mm, and a length of 20 mm. This aluminum electrolytic capacitor was not short-circuited in the aging test, and had an impedance of 0.20 Ω.

### [Conventional Example 2]

A triple-layer separator having a thickness of 60 um, a basis weight of 30.0 g/m², and a density of 0.50 g/cm³ was obtained by mixing 50% of Manila hemp pulp, which is musaceae pulp, and 50% of straw pulp, which is poaceae pulp, to a CSF value of 600 ml using the DDR, and then making paper using the cylinder triple-layer paper machine. The tensile strength of this separator was 34.3 N/15 mm, the specific tear strength was 24.2 mN·m²/g, the short-circuit rate during application of 500 V was 3.7%, and the front-to-back ratio of number of parenchymal cells was 5.5.

Five hundred capacitor elements were fabricated using this separator, impregnated with an EG-based electrolytic solution and inserted into a case, and then sealed to form an aluminum electrolytic capacitor having a rated voltage of 100 V, a capacity of 100 µF, a diameter of 12.5 mm, and a length of 20 mm. This aluminum electrolytic capacitor was not short-circuited in the aging test, and had an impedance of 0.31 Ω.

Table 1 shows the evaluation results of the separator and the impedance of the capacitor with a rated voltage of 100 V of each of Examples 1 to 6, Comparative Examples 1 to 7, Conventional Examples 1 and 2.

**[Table 1]**

| | Natural cellulose fiber | | Regenerated cellulose fiber | | Papermaking type | Separator characteristics | | | | | | | Capacitor characteristics | |
|---|---|---|---|---|---|---|---|---|---|---|---|---|---|---|
| | Pulp | Ratio | Regenerated cellulose fiber | Ratio | Type | Thickness | Basis weight | Density | Tensile strength | Specific tear strength | Short-circuit rate during application of 500 V | Ratio of number of cells mal | Occurrence of short circuit during aging | Impedance |
| | - | % | - | % | - | *µ* m | g/m² | g/cm³ | N/15mm | mN·m²/g | % | - | No | Ω |
| Example 1 | Malvaceae kenaf pulp | 60 | Lyocell | 40 | Cylinder triple-layer paper machine | 50 | 22.5 | 0.45 | 24.5 | 47.9 | 0.2 | 2.5 | No | 0.18 |
| Example 2 | Malvaceae kenaf pulp | 80 | Lyocell | 20 | Cylinder triple-layer paper machine | 60 | 15.0 | 0.25 | 16.7 | 98.0 | 5.8 | 1.7 | No | 0.15 |
| Example 3 | Tiliaceae jute pulp | 50 | Lyocell | 50 | Cylinder double-layer paper machine | 20 | 9.0 | 0.45 | 10.0 | 38.1 | 9.6 | 3.7 | No | 0.15 |
| Example 4 | Poaceae bamboo pulp | 90 | Lyocell | 10 | Cylinder double-layer paper machine | 35 | 21.0 | 0.60 | 32.3 | 35.0 | 1.6 | 2.8 | No | 0.18 |
| Example 5 | Poaceae straw pulp | 50 | Lyocell | 50 | Cylinder double-layer paper machine | 40 | 20.0 | 0.50 | 16.7 | 27.0 | 0.8 | 4.8 | No | 0.22 |
| Example 6 | Poaceae dragon grass pulp | 70 | Polynosic rayon | 30 | Cylinder double-layer paper machine | 50 | 25.0 | 0.50 | 29.4 | 37.2 | 0.0 | 4.1 | No | 0.20 |
| Comparative Example 1 | Malvaceae kenaf pulp | 80 | Lyocell | 20 | Cylinder triple-layer paper machine | 65 | 15.0 | 0.23 | 10.8 | 104.9 | 16.4 | 1.5 | Yes | 0.16 |
| Comparative Example 2 | Tiliaceae jute pulp | 50 | Lyocell | 50 | Cylinder double-layer paper machine | 18 | 7.7 | 0.43 | 9.0 | 38.0 | 23.0 | 3.3 | Yes | 0.13 |
| Comparative Example 3 | Poaceae bamboo pulp | 95 | Lyocell | 5 | Cylinder double-layer paper machine | 35 | 21.0 | 0.60 | 23.5 | 23.3 | 2.6 | 2.5 | No | 0.20 |
| Comparative Example 4 | Poaceae bamboo pulp | 100 | - | - | Cylinder double-layer paper machine | 35 | 21.0 | 0.60 | 23.5 | 22.4 | 2.8 | 2.4 | No | 0.20 |
| Comparative Example 5 | Poaceae straw pulp | 40 | Lyocell | 60 | Cylinder double-layer paper machine | 40 | 20.0 | 0.50 | 18.6 | 28.4 | 0.4 | 5.3 | No | 0.27 |
| Comparative Example 6 | Poaceae straw pulp | 50 | Lyocell | 50 | Cylinder triple-layer paper machine | 30 | 15.0 | 0.50 | 14.7 | 18.3 | 0.4 | 4.6 | No | 0.21 |
| Comparative Example 7 | Poaceae dragon grass pulp | 70 | Polynosic rayon | 30 | Cylinder single-layer paper machine | 50 | 25.0 | 0.50 | 28.4 | 36.8 | 2.4 | 6.8 | No | 0.26 |
| Conventional Example 1 | Musaceae Manila hemp pulp Poaceae esparto pulp | 100 | - | - | Cylinder double-layer paper machine | 50 | 25.0 | 0.50 | 29.4 | 32.9 | 4.0 | 1.9 | No | 0.20 |
| Conventional Example 2 | Musaceae Manila hemp pulp Poaceae esparto pulp | 100 | - | - | Cylinder triple-layer paper machine | 60 | 30.0 | 0.50 | 34.3 | 24.2 | 3.7 | 5.5 | No | 0.31 |

The separator of Example 2 used lyocell fibers having a CSF value of 200 ml and an average fiber length of 3.50 mm, but the separator of comparative Example 1 used lyocell fibers having a CSF value of 230 ml and an average fiber length of 3.70 mm. In the separator of Comparative Example 1, since the raw material had a long average fiber length, the formation of the separator deteriorated and the density also fell below 0.25 g/cm³, resulting in a deteriorated short-circuit rate during application of 500 V to 16.4%. In addition, the specific tear strength of the separator of Comparative Example 1 was 104.9 mN·m²/g, exceeding 100 mN·m²/g.

When the specific tear strength exceeds 100 mN·m²/g, the average fiber length of the raw material is too long, resulting in deteriorated formation and reduced short-circuit resistance of the separator. In addition, when the density falls below 0.25 g/cm³, the tensile strength significantly decreases.

The separators of Example 3 and Comparative Example 2 were obtained by using the same raw material and making paper with the cylinder double-layer paper machine, but the separator of Example 3 had a thickness of 20 um and a basis weight of 9.0 g/m² while the separator of Comparative Example 2 had a thickness of 18 um and a basis weight of 7.7 g/m². The separator of Comparative Example 2 was fabricated by making paper with the multilayer cylinder paper machine, but since the thickness was less than 20 um, the tensile strength was greatly reduced to 9.0 N/15 mm due to the insufficient number of overlapping fibers, resulting in breakage of the separator during the fabrication of the capacitor element. In addition, as a result of deterioration in short-circuit resistance, the short-circuit rate during application of 500 V was 23.0% and aging short circuit occurred. The short-circuit rate during application of 500 V and the short circuit of the aluminum electrolytic capacitor in the aging test are correlated with each other, and it is necessary to set the short-circuit rate of the separator during application of 500 V to 10% or less in order to suppress the short circuit of the aluminum electrolytic capacitor in the aging test. Furthermore, the separator of the present invention preferably has a thickness of 20 um or more and a basis weight of 8.0 g/m² or more.

The separators of Example 4, Comparative Example 3, and Comparative Example 4 were fabricated by making the blending ratio of bamboo pulp and lyocell fibers different from each other while using the same thickness and density. The ratio of the regenerated cellulose fibers in the separator of Example 4 was 10% by mass, but Comparative Example 3 was 5% by mass and Comparative Example 4 was 0% by mass.

The separator of Example 4 is superior to the separator of Comparative Example 4 in tensile strength, specific tear strength, and short-circuit rate during application of 500 V.

On the other hand, the separator of Comparative Example 3 has the almost the same value in tensile strength, specific tear strength, and short-circuit rate during application of 500 V, compared to the separator of Comparative Example 4.

It is necessary to set the ratio of the beaten regenerated cellulose fibers to 10% by mass or more in order to obtain the effect of improving the short-circuit resistance and the strength characteristics and the effect of reducing the impedance by adding the beaten regenerated cellulose fibers.

The separators of Example 5 and Comparative Example 5 were fabricated by making the blending ratio of straw pulp and lyocell fibers different from each other while using the same thickness and density. In general, since beaten regenerated cellulose fibers are superior to natural cellulose fibers in impedance characteristics, the impedance of the separator is reduced as the blinding ratio increases. However, the impedance of the capacitor using the separator of Comparative Example 5 having a larger ratio of lyocell fibers was higher than that of the capacitor using the separator of Example 5 having a smaller ratio of lyocell fibers. This is because the beaten regenerated cellulose fibers, which had many fibrils having a small fiber diameter and thus improved the compactness of the separator, captured parenchymal cells in the natural cellulose fibers that were originally supposed to flow out into white water during papermaking with the cylinder paper machine, thus increasing the ratio of the parenchymal cells in the separator.

It is necessary to set the ratio of the beaten regenerated cellulose fibers to 50% by mass or less when making paper by mixing natural cellulose fibers having many parenchymal cells, particularly, malvaceae pulp, tiliaceae pulp, and poaceae pulp with beaten regenerated cellulose fibers.

The separators of Example 6 and Comparative Example 7 were fabricated with the cylinder double-layer paper machine and the cylinder single-layer paper machine, respectively, using the same raw material. Since the separator of Comparative Example 7 fabricated by the cylinder single layer paper machine has a higher ratio of parenchymal cells in the separator than the separator of Example 6 fabricated by the cylinder double layer paper machine, the tensile strength and the specific tear strength of the separator of Comparative Example 7 were slightly reduced, and the impedance of the capacitor greatly deteriorated. It is preferable to use a cylinder multilayer paper machine to make the paper of the separator of the present invention.

### [Example 7]

A triple-layer separator having a thickness of 120 um, a basis weight of 81.6 g/m², and a density of 0.68 g/cm³ was obtained by beating a raw material obtained by mixing 50% by mass of bagasse pulp having a CSF value of 650 ml, which is poaceae pulp, and 50% by mass of lyocell fibers having a CSF value of 200 ml and an average fiber length of 3.50 mm, which are beaten regenerated cellulose fibers, to a CSF value of 300 ml using the DDR and then making paper using the cylinder triple-layer paper machine. The tensile strength of this separator was 73.5 N/15 mm, the specific tear strength was 30.0 mN·m²/g, the short-circuit rate during application of 500 V was 0.0%, and the front-to-back ratio of number of parenchymal cells was 4.8.

Five hundred capacitor elements were fabricated using this separator, impregnated with a GBL-based electrolytic solution and inserted into a case, and then sealed to form an aluminum electrolytic capacitor having a rated voltage of 400 V, a capacity of 10 µF, a diameter of 12.5 mm, and a length of 20 mm. This aluminum electrolytic capacitor was not short-circuited in the aging test.

Thus, it was confirmed that the separator of the present invention can also be applied to so-called medium-high pressure GBL aluminum electrolytic capacitors.

As described above, according to the present embodiment, it is possible to provide a separator for aluminum electrolytic capacitors that uses malvaceae pulp, tiliaceae pulp, and poaceae pulp, which can be stably obtained over a medium to long term, and beaten regenerated cellulose fibers, and that is excellent in tear strength, short-circuit resistance, and impedance characteristics, as well as an aluminum electrolytic capacitor using such a separator.

An example in which the separator of the present embodiment is used for the aluminum electrolytic capacitor has been described above.

Although details of other configurations and manufacturing methods of the aluminum electrolytic capacitor are omitted, the electrode material and the electrolytic solution material are not particularly limited and various materials can be used in the aluminum electrolytic capacitor of the present invention. In addition, as long as the element outer diameter allows, it is also possible to use a plurality of separators of the present invention or use one or more separators of the present invention stacked together with another separator in a multi-layered manner.

## Claims

1. A separator for an aluminum electrolytic capacitor interposed between a positive electrode and a negative electrode of the aluminum electrolytic capacitor, the separator comprising:
from 50% by mass to 90% by mass of natural cellulose fiber and from 50% by mass to 10% by mass of beaten regenerated cellulose fiber,
wherein a specific tear strength is from 20 to 100 mN·m²/g and a short-circuit rate is 10% or less during application of 500 V in separator dielectric breakdown testing.

2. The separator for the aluminum electrolytic capacitor according to claim 1, wherein the natural cellulose fiber is composed of one or more kinds of material selected from the group consisting of malvaceae pulp, tiliaceae pulp, and poaceae pulp.

3. The separator for the aluminum electrolytic capacitor according to claim 1 or 2, wherein a thickness is 20 to 120 um and a density is 0.25 to 0.70 g/cm³.

4. An aluminum electrolytic capacitor comprising:
a positive electrode, a negative electrode, and a separator interposed between the positive electrode and the negative electrode,
wherein the separator for the aluminum electrolytic capacitor according to any one of claims 1 to 3 is used as the separator.
